# EUROPEAN PATENT SPECIFICATION

(11) **EP 2 327 526 B1**
(45) Date of publication and mention of the grant of the patent: **14.10.2015**
(21) Application number: 09400056.9
(22) Date of filing: 27.11.2009
(51) Int. Cl.: B29C 33/52, B29C 33/76

(54) **Mold core comprising a decomposable and a non-decomposable portion**
Formkern mit einem abbaubaren Teil und einem nicht abbaubaren Teil
Noyau de moule comprenant une partie soluble et une partie non soluble

(43) Date of publication of application: 01.06.2011
(73) Proprietor: AIRBUS HELICOPTERS DEUTSCHLAND GmbH, 86609 Donauwörth (DE)
(72) Inventor: Kunze, Steffen, 83620 Vagen (DE); Kretschmer, Tom, 01936 Königsbrück (DE)
(74) Representative: Pouillot, Laurent Pierre Paul

(56) References cited:
- WO-A1-92/08594
- DE-A1- 10 322 297
- DE-A1- 10 342 867
- DE-A1-102006 031 323
- DE-A1-102008 013 759
- FR-A1- 2 695 836
- JP-A- 8 174 143

## Description

The present invention relates to the general technical field of fabricating hollow parts based on metallic or organic materials, e.g. including reinforcement based on fibers. By way of example, these parts are obtained by molding a composite material, e.g. reinforced with fibers and resin.

The present invention relates more particularly to the field of fabricating hollow parts of shapes, often complex shapes, that present projecting portions such as raised portions, enlargements, or shoulders, etc., which are often difficult or even impossible to separate from their mold cores. Even if the mold core is to be destroyed, the operations of unmolding and extracting the mold core can be found to be technically complex and expensive.

The present invention thus relates more particularly to making mold cores.

In order to counter problems of that kind, it is therefore known, during molding operations, to make use of cores that are soluble in water or in some other liquid. In order to obtain sufficient solubility together with low density, the materials constituting such mold cores are generally open-celled compounds of the Aquacore™ kind. Such mold cores, that are soluble in a liquid, described for instance in document US 6,828,373 or in document EP 1 695 805, are themselves known. In addition, mold cores which are removable by other methods, such as ultrasonic excitation or methods supported by mechanical energy, are also known.

Document FR 2 695 836 discloses a mold core according to the preamble of claim 1.

In the following, the terms "decomposable portion" encompasses any material, material association or compound, which can be removed by any known physical or chemical principles, such as by dissolution. On the contrary, the terms "non-decomposable portion" encompasses any material, material association or compound, which cannot be removed by any analogical physical or chemical principles.

The major drawback of soluble mold cores of that kind is that, when fabricating them, it is necessary to have recourse to a large quantity of soluble material, which material is dissolved away completely in order to separate the molded part from said mold core, with this drawback applying particularly when the molded part presents large dimensions.

That problem is made worse in so far as it is necessary to have as many mold cores as there are parts to be fabricated.

That considerably increases the quantity of soluble material that needs to be used, to be stored and to be disposed of or reprocessed. That inevitably leads to an increase in the cost of fabricating mold cores.

Furthermore, after the soluble mold cores have been dissolved, it is appropriate to reprocess a large quantity of liquid containing the constituent material of said mold cores in dissolved form. Such reprocessing operations, often associated with storing materials for reprocessing or materials that have been processed in compliance with standards that are in force, give rise to cost that is not negligible.

Furthermore, the constitution of the decomposable portion of such mold cores is often not homogeneous enough, so that an automated production of such mold cores (core shooting) is not satisfactory.

The document DE 10322297 (A1) discloses a core produced by injection molding. A fusible core is poured on a supporting core. Reinforcing fibers are applied on the core, erecting a fibrous structure which is immersed in hardenable resin and then sent through a furnace. The resin hardens at a first temperature. The core is extracted at a second temperature followed by the supporting core and a component is obtained.

An object of the present invention is thus to provide a novel mold core that makes it possible to reduce or avoid the above-mentioned limitations.

Another object of the invention is to provide a novel mold core that is simpler to fabricate and less expensive.

Another object of the invention is to provide a molding device for molding composite parts, including a novel mold core which does not present the above mentioned drawbacks.

Another object of the invention is to provide a novel molding device for an automated production of a mold core that has a homogeneous constitution.

The objects given to the invention are achieved with the help of a mold core according to claim 1.

In an embodiment of the mold core in accordance with the invention, the decomposable portion surrounds the non-decomposable portion, at least in part.

In another embodiment of the mold core in accordance with the invention, the decomposable portion surrounds the non-decomposable portion completely.

In an embodiment of the mold core in accordance with the invention, a bonding layer, such as a layer of adhesive, constitutes the interface between the decomposable and non-decomposable portions. Ideally this bond is obtained by using any of the decomposable binder ingredients of the decomposable mold core, e.g. polyvinylpyrrolidone (PVP) or polyvinyl alcohol (PVAL). The bond could be obtained either by applying additional binder material on the non-decomposable core portion or by using the binder material present in the decomposable core material.

In another embodiment of the mold core, the attachment between the soluble and the non-decomposable portion of the mold core could be achieved through form-fit, e.g. by suitable geometric forms of the non-decomposable portion, such as hexagonal cross-section or T-shaped ends in the mold core.

In an embodiment of the mold core in accordance with the invention, the material constituting the decomposable portion is a soluble material combination or a soluble compound that comprises an Aquacore™ or similar material or an inorganic binder. Such an inorganic binder is known for instance under the name Inotec™.

In an embodiment of the mold core in accordance with the invention, the material constituting the non-decomposable portion could be based on any non-decomposable material suitable within the scope of the mold core, e.g. a metallic material (e.g. a steel or aluminium alloy) or another material compound that has little chemical reactivity under the given circumstances during molding of the core and the composite part (e.g. a ceramic or aerated autoclaved concrete (AAC, e.g. Ytong)), or a combination of several suitable solid materials (e.g. a metal insert in a ceramic based material). The form of material could be either solid, foamed or of porous nature.

The non-decomposable portion could feature a threaded hole or the like, for attachment of additional elements (fixation or positioning). The non-decomposable portion could so comprise positioning or fixing means in order to position and to fix and the complete core in a fiber reinforced part, prior to a molding step. In addition, the non-decomposable portion could be made up of a hollow, solid part of the above mentioned materials (e.g. for mass reduction).

In an embodiment of the mold core in accordance with the invention, the non-decomposable portion incorporates pressure sensors and/or temperature sensors.

In an embodiment of the mold core in accordance with the invention, the non-decomposable portion incorporates heater means and/or cooler means.

In an embodiment of the mold core in accordance with the invention, the non-decomposable portion comprises at least one air intake port and at least one exhaust port, wherein the at least one air intake port communicates with the air exhaust port through one or more air channels. The non-decomposable portion comprises so an advantageous pressure sink means.

In an embodiment of the mold core in accordance with the invention, the at least one air intake port comprises filtering means for retaining the core material or compound of the decomposable portion.

The objects given to the invention are also achieved with the help of a molding device of a composite part, including at least one mold core as described above.

The objects given to the invention could be achieved with the help of a molding device for an automated production of a core as described above, comprising an outer tooling having at least one compound injection port and at least two air evacuation ports and an inner tooling which is the non-decomposable portion, characterized in that the non-decomposable portion comprises at least one air intake port in communication with the inner space of the outer tooling and at least one exhaust port in communication with one of the air evacuation ports, wherein the at least one air intake port communicates with the air exhaust port through one or more air channels.

In an embodiment of the mold core in accordance with the invention, the air intake and the air evacuation ports are in fluidic communication with the inner space of the outer tooling, comprise filtering means for retaining only an injected core material or compound of the decomposable portion in the said inner space.

An advantage of the mold core in accordance with the invention lies in a substantial reduction in the quantity of soluble material that is used for fabricating it. This gives rise to a corresponding substantial reduction in the quantity of liquid containing the soluble material in dissolved form and that needs to be disposed of or reprocessed.

Furthermore, the method of fabricating the mold core in accordance with the invention is simplified because only a small quantity of decomposable material is needed for fabricating said mold core in accordance with the invention.

Another advantage is of economic order, in so far as the non-decomposable portion of the mold core can be reused to fabricate another mold core of shape that is identical or different. Only the quantity of decomposable material that is necessary for making the decomposable portion needs to be replaced when fabricating a mold core in accordance with the invention.

Another advantage lies in the possibility of providing the reusable non-decomposable portion with novel functions. These functions may be obtained by incorporating in the non-decomposable portion at least one temperature sensor and/or pressure sensor. In like manner, it is possible to envisage incorporating heater means and/or cooler means in the non-decomposable portion. It is then possible, during the molding operation, to obtain better monitoring of temperature and pressure inside of the mold core, and more generally inside the mold. Any possible departures in temperature or in pressure that might affect the shape of the mold core and consequently the shape of the future molded part can thus be compensated.

The invention and its advantages appear in greater detail from the following description of an embodiment given by way of illustration and with reference to the accompanying figures, in which:
- Figure 1 shows an embodiment of a mold core in accordance with the invention;
- Figure 2 shows another embodiment of a mold core in accordance with the invention;
- Figure 3 shows another embodiment of a mold core in accordance with the invention and placed in a hollow part obtained by molding;
- Figure 4 shows a cross-section of another embodiment of a mold core in accordance with the invention,
- Figure 5 shows a lateral view of the mold core of the mold core of figure 4;
- Figure 6 shows a cross-section of another embodiment of a mold core in accordance with the invention;
- Figure 7 shows a cross-section of another embodiment of a mold core in accordance with the invention,
- and Figure 8 shows a cross-section of an embodiment of a molding device for an automated production of a mold core, in accordance with the invention.

Elements that are structurally and functionally identical and that are present in more than one of the figures are given the same numeric or alphanumeric references in each of them.

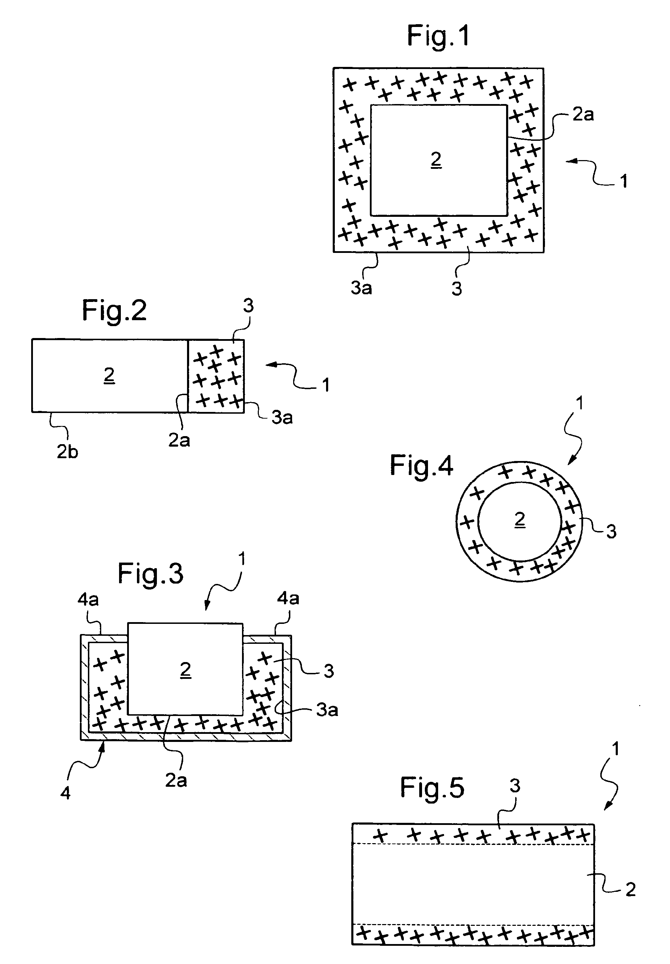

For reasons of simplification, the illustrations of Figures 1, 2, and 3 are two-dimensional views of mold cores 1 in accordance with the invention.

Figure 1 shows an embodiment of a mold core 1 in accordance with the invention. The mold core 1 comprises a non-decomposable portion 2 that is not soluble for instance and a decomposable portion 3 that is soluble for instance in a liquid, e.g. water, or removable by ways other than liquid dissolution.

The shape of the non-decomposable portion 2 is arbitrary, however it preferably presents a shape that is geometrically simple, such as a cube, a sphere, or a cylinder, so as to make it simpler to fabricate. The non-decomposable portion 2 in Figure 1 thus presents a shape that is rectangular or in the form of a cube, and it constitutes the kernel of the mold core 1. However this form could be as different as the adherence between decomposable and non-decomposable portions 3,2 of the mold core 1 demands it (e.g. stars, spirals or other forms that positively influence the adherence between the two portions 3,2 and the robustness of the mold core 1 as a unit).

The decomposable portion 3 surrounds the non-decomposable portion 2 completely and it presents an outside face 3a that defines the inside shape of a future part 4 that is to be molded.

In one embodiment of a mold core 1 in accordance with the invention, a bonding layer 2a, such as a layer of adhesive, constitutes the interface between the decomposable portion 3 and the non-decomposable portion 2.

Figure 2 shows another embodiment of a mold core 1 in accordance with the invention. In this embodiment, it is the outside face 3a and at least a portion of at least one other outside face 2b that define the inside shape of the future part 4 that is to be molded.

Figure 3 shows a molded part 4 including the mold core 1 in accordance with the invention. In this embodiment, the non-decomposable portion 2 is surrounded in part only by the decomposable portion 3. The decomposable portion 3 serves in particular to shape the edges 4a of the part 4 that prevent the mold core 1 from being extracted while it is in solid form. Thereafter, removing for instance by dissolving the decomposable portion 3 enables the non-decomposable portion 2 to be extracted without difficulty, in spite of the presence of the edges 4a.

Naturally, the outside shape of the mold core 1 depends on the inside shape of the future part 4 that is to be molded, however the dimensions and the relative shapes of the soluble portion 3 and of the non-decomposable portion 2 are selected so as to satisfy two objectives. The first objective consists in facilitating extraction of the mold core 1, and the second objective consists in minimizing the quantity of material that is used in fabricating the soluble portion 3.

In figures 4 and 5, the non-decomposable portion 2 and the decomposable portion 3 are two coaxial cylindrical pieces. The outer cylinder constitutes the decomposable portion 3. An annular cylindrical decomposable portion 3 surrounds a cylindrical non-decomposable portion 2.

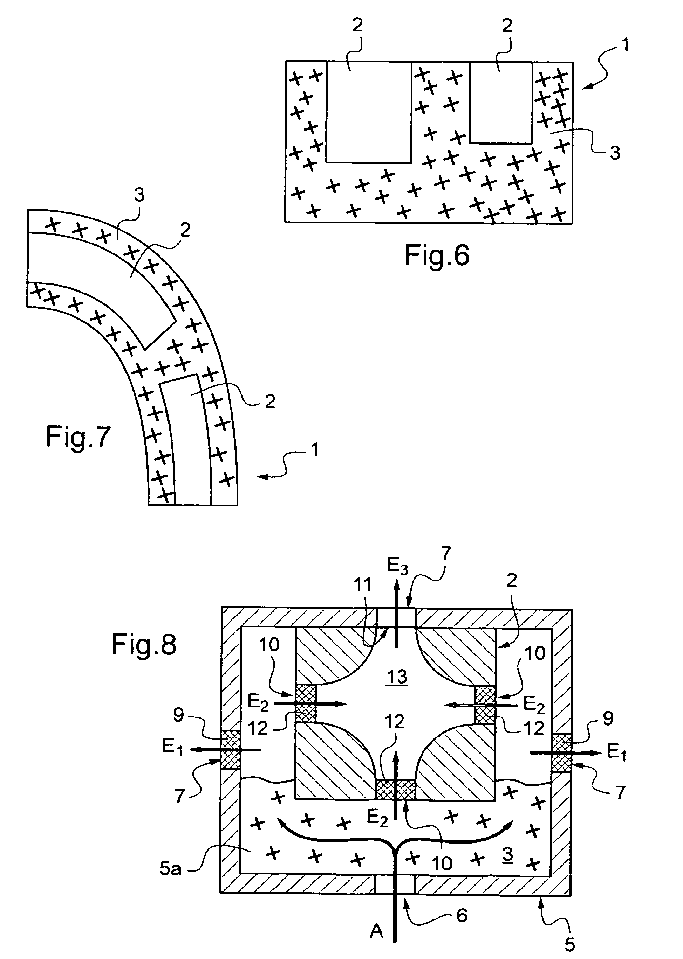

In the embodiment of figure 6, the non-decomposable portions 2 are inserted and mutually separated in a bigger piece of material that constitutes the soluble portion 3. In this embodiment, two different sized non-decomposable portions 2 are inserted in the decomposable portion 3.

The embodiment shown in figure 7 differs from the embodiment of figure 6, by the curved shape of the decomposable portion 3 and of the non-decomposable portion 2. Many other shapes of the portions 3 and 2 of can be envisaged to build a mold core according to the invention.

Figure 8 shows a cross-section of an embodiment of a molding device for an automated production of a mold core 1, in accordance with the invention.

The molding device for an automated production of a core according comprises an outer tooling 5 having at least one compound injection port 6 and at least two air evacuation ports 7.

The molding device for an automated production of a core according comprises also an inner tooling which is the non-decomposable portion 2.

A free inner space 5a defines the shape of the decomposable portion 3 which to be injected within the outer tooling 5.

The non-decomposable portion 2 comprises at least one air intake port 10 in communication with the inner space 5a of the outer tooling 5 and at least one exhaust port 11 in communication with one of the air evacuation ports 7. The at least one air intake port 10 communicates with the air exhaust port 11 through one or more air channels or any hollow inner portion 13.

The air intake ports 10 and the air evacuation ports 7 are in fluidic communication with the inner space 5a of the outer tooling 5 and comprise filtering means 9, 12 for retaining an injected core material or compound of the decomposable portion 3 in the said inner space 5a.

Naturally, the present invention can be subjected to numerous variations as to its implementation. Although several embodiments are described above, it will really be understood that it is not conceivable to identify exhaustively all possible embodiments. It is naturally possible to envisage replacing any of the means described or any of the steps described with equivalent means or an equivalent step without going beyond the ambit of the present invention.

## Claims

1. A mold core (1) for molding a hollow part (4) out of composite material, in particular a material based on fibers, fabrics, or textiles, and that is impregnated with a resin, the mold core being **characterized in that** it comprises both a decomposable portion (3) that is decomposable by using any physical or chemical principle, and an non-decomposable portion (2) that is not decomposable by using any identical or analogical physical or chemical principle, said portions being secured to each other so as to define the shape and the volume of said core (1), wherein the material constituting the decomposable portion (3) is a soluble material combination or a soluble compound that comprises an inorganic binder, **characterized in that** a bonding layer (2a), such as a layer of adhesive, constitutes the interface between the decomposable portion (3) and the non-decomposable portion (2).

2. A mold core (1) according to claim 1,
**characterized in that** the decomposable portion (3) surrounds the non-decomposable portion (2), at least in part.

3. A mold core (1) according to claim 1,
**characterized in that** the decomposable portion (3) surrounds the non-decomposable portion (2) completely.

4. A mold core (1) according to any one of claims 1 to 3,
**characterized in that** the material constituting the non-decomposable portion (2) is insoluble and is based on a metallic, ceramic or other material, material combination or compound, that has little chemical reactivity under given circumstances during molding of the core and the composite part.

5. A mold core (1) according to any one of claims 1 to 4,
**characterized in that** the non-decomposable portion (2) incorporates pressure sensors and/or temperature sensors.

6. A mold core (1) according to any one of claims 1 to 5,
**characterized in that** the non-decomposable portion (2) incorporates heater means and/or cooler means.

7. A mold core (1) according to any one of claims 1 to 6,
**characterized in that** the non-decomposable portion (2) comprises positioning or fixing means in order to position and to fix and the complete core in a fiber reinforced part, prior to a molding step.

8. A mold core (1) according to any one of claims 1 to 7,
**characterized in that** the non-decomposable portion (2) comprises at least one air intake port and at least one exhaust port, wherein the at least one air intake port communicates with the air exhaust port through one or more air channels.

9. A mold core (1) according to claim 8,
**characterized in that** the at least one air intake port comprises filtering means for retaining the core material or compound of the decomposable portion (3).

10. A molding device for molding a composite part, including a mold and at least one mold core (1) in accordance with any one of claims 1 to 7.

## Patentansprüche

1. Formkern (1) zum Formen eines hohlen Teils (4) aus Verbundmaterial, insbesondere aus einem Material auf der Grundlage von Fasern, Geweben oder Stoffen, das mit einem Harz imprägniert ist, wobei der Formkern **dadurch gekennzeichnet, ist, dass** er sowohl einen abbaubaren Teil (3), der abbaubar ist durch Anwendung eines beliebigen physikalischen oder chemischen Prinzips, als auch einen nicht-abbaubaren Teil (2) aufweist, der nicht-abbaubar ist durch die Anwendung irgendeines identischen oder analogen physikalischen oder chemischen Prinzips, wobei die Teile aneinander befestigt sind, um die Form und das Volumen des Formkerns (1) zu definieren, wobei das Material, aus dem der abbaubare Teil (3) besteht, eine lösliche Materialkombination ist oder ein löslicher Materialverbund, der ein anorganisches Bindemittel aufweist, **dadurch gekennzeichnet, dass** eine Klebeschicht (2a), wie eine Schicht aus Klebstoff, die Grenzfläche zwischen dem abbaubaren Teil (3) und dem nicht-abbaubaren Teil (2) bildet.

2. Formkern (1) nach Anspruch 1,
**dadurch gekennzeichnet, dass** der abbaubare Teil (3) den nicht-abbaubaren Teil (2) zumindest teilweise umschließt.

3. Formkern (1) nach Anspruch 1,
**dadurch gekennzeichnet, dass** der abbaubare Teil (3) den nicht-abbaubaren Teil (2) vollständig umschließt.

4. Formkern (1) nach einem der Ansprüche 1 bis 3,
**dadurch gekennzeichnet, dass** das Material, welches den nicht-abbaubaren Teil (2) bildet, unlöslich ist, und auf einem metallischen, keramischen oder anderem Material, einer Materialkombination oder einem Materialverbund basiert, welche/welcher unter den gegebenen Umständen während des Formens des Kerns und des Teils aus Verbundmaterial eine geringe chemische Reaktivität aufweist.

5. Formkern (1) nach einem der Ansprüche 1 bis 4,
**dadurch gekennzeichnet, dass** der nicht-abbaubare Teil (2) Drucksensoren und/oder Temperatursensoren aufweist.

6. Formkern (1) nach einem der Ansprüche 1 bis 5,
**dadurch gekennzeichnet, dass** der nicht-abbaubare Teil (2) Heizmittel und/oder Kühlmittel aufweist.

7. Formkern (1) nach einem der Ansprüche 1 bis 6,
**dadurch gekennzeichnet, dass** der nicht-abbaubare Teil (2) Positionierungs- oder Befestigungsmittel aufweist, um den vollständigen Kern in einem faserverstärkten Teil vor einem Formungsschritt zu positionieren und zu befestigen.

8. Formkern (1) nach einem der Ansprüche 1 bis 7,
**dadurch gekennzeichnet, dass** der nicht-abbaubare Teil (2) mindestens eine Lufteinlassöffnung und mindestens eine Luftauslassöffnung aufweist, wobei die mindestens eine Lufteinlassöffnung mit der Luftauslassöffnung über einen oder mehrere Luftkanäle in Verbindung steht.

9. Formkern (1) nach Anspruch 8,
**dadurch gekennzeichnet, dass** die mindestens eine Lufteinlassöffnung Filtermittel aufweist, um das Kernmaterial oder den Materialverbund des abbaubaren Teils (3) zurückzuhalten.

10. Formungsvorrichtung zum Formen eines Teils aus Verbundwerkstoff mit einer Form und mindestens einem Formkern (1) nach einem der Ansprüche 1 bis 7.

## Revendications

1. Un noyau (1) pour le moulage d'une pièce creuse (4) en matériau composite, en particulier un matériau à base de fibres, de tissus ou de textiles, imprégné d'une résine, le noyau étant **caractérisé en ce qu'**il comprend une partie décomposable (3) au moyen d'un principe physique ou chimique et une partie non-décomposable (2) qui ne se décompose pas au moyen d'un principe physique ou chimique identique ou analogue, lesdites parties étant fixées l'une à l'autre afin de définir la forme et le volume dudit noyau (1), dans lequel le matériau constituant la partie décomposable (3) est une combinaison de matériaux solubles ou un composé soluble comprenant un liant inorganique, **caractérisé en ce qu'**une couche de liage (2a), telle qu'une couche d'adhésif, constitue l'interface entre la partie décomposable (3) et la partie non-décomposable (2)

2. Un noyau (1) selon la revendication 1,
**caractérisé en ce que** la partie décomposable (3) entoure au moins partiellement la partie non-décomposable (2).

3. Un noyau (1) selon la revendication 1,
**caractérisé en ce que** la partie décomposable (3) entoure totalement la partie non-décomposable (2).

4. Un noyau (1) selon l'une quelconque des revendications 1 à 3,
**caractérisé en ce que** le matériau constituant la partie non-décomposable (2) est insoluble et à base d'un matériau métallique, céramique ou autre, d'une combinaison de matériaux ou d'un composé, faiblement réactif chimiquement dans des circonstances données pendant le moulage du noyau et de la pièce composite.

5. Un noyau (1) selon l'une quelconque des revendications 1 à 4,
**caractérisé en ce que** la partie non-décomposable (2) contient des capteurs de pression et/ou des capteurs de température.

6. Un noyau (1) selon l'une quelconque des revendications 1 à 5,
**caractérisé en ce que** la partie non-décomposable (2) contient des moyens de chauffage et/ou des moyens de refroidissement.

7. Un noyau (1) selon l'une quelconque des revendications 1 à 6,
**caractérisé en ce que** la partie non-décomposable (2) comprend des moyens de positionnement ou de fixation afin de positionner et fixer le noyau complet dans une pièce armée de fibre, avant l'étape de moulage.

8. Un noyau (1) selon l'une quelconque des revendications 1 à 7,
**caractérisé en ce que** la partie non-décomposable (2) comprend au minimum un orifice d'entrée d'air et au minimum un orifice de sortie, l'orifice ou les orifices d'entrée d'air communiquant avec l'orifice de sortie d'air par un ou plusieurs canaux d'air.

9. Un noyau (1) selon la revendication 8,
**caractérisé en ce que** l'orifice ou les orifices d'entrée d'air comprennent des moyens de filtration afin de retenir le matériau ou composé de la partie décomposable (3) du noyau.

10. Un dispositif de moulage pour mouler une pièce composite, y compris un moule et au minimum un noyau (1) conformément à l'une quelconque des revendications 1 à 7.
